# EUROPEAN PATENT APPLICATION

(11) **EP 1 732 050 A1**
(43) Date of publication of application: **13.12.2006**
(21) Application number: 06380014.8
(22) Date of filing: 18.01.2006
(51) Int. Cl.: G08C 17/00

(54) **Apparatus control system**

(30) Priority: 08.06.2005 ES 200501374
(71) Applicant: Stop Casa Segura, S.L., 34500 Tudela, Navarra (ES)
(72) Inventor: Morte Tejero, Pablo, 50500 Tarazona, Zaragoza (ES); Garcia Morte, Antonio, 50004 Zaragoza (ES); Perez Jarauta, Benito, 50500 Tarazona, Zaragoza (ES); Martinez Jarauta, Juan José, 31500 Tudela, Navarra (ES)
(74) Representative: Carvajal y Urquijo, Isabel

(57) **Abstract**

The present invention relates to an apparatus control system comprising a series of transmitters (1) sending a signal to one or more receivers (3), each of them connected to one or more apparatus such as a domotics system or a door (2, 4).

Each transmitter (1) sends an encrypted signal to the receiver (3) in which a unique identifier, the emitted command and the target apparatus are included. The receiver (3) decrypts the signal, authenticates the transmitter (1) and transmits the command to the apparatus.

The system may include a series of permissions for each transmitter (1) or group of transmitters for both the apparatus to which commands can be given and the schedule in which commands can be given.

These commands may include a request for information on the state of the domotics system (6) or door (2, 4) so as to optimize the commands to be applied.

## Description

### Field of the Invention

The present invention relates to a system for opening a door or controlling a domotics system by means of a wireless signal emitting device, such as Bluetooth (TM), HomeRF, Zigbee and the like.

More specifically, the invention relates to a system for identifying the person who wishes to enter the building or apartment or who wishes to give a command to a domotics system or any connection/disconnection element by means of a signal sent from his or her mobile telephone or PDA using wireless communication technology, such as Bluetooth (TM), HomeRF, Zigbee or Wireless.

Domotics systems can be alarm systems, air conditioning equipment, lights, etc.

### State of the Art

The invention belongs to the field of the art pertaining to that of opening doors using remote controls, and controlling domotics systems by remote control.

Remote controls which allow opening a garage door when a signal is emitted from a device, which is usually kept in the car, are known. This device has the disadvantage of being used only for this purpose, so users generally keep it in their vehicle and they cannot use it when they want to enter the garage with another vehicle.

This system further offers somewhat of a security problem as it is easy for a frequency detector to recognize the frequency used by the control, thereby not being able to prevent a thief from entering.

Remote controls controlling air conditioning apparatus, sound systems, etc., are known, each one of these apparatus requiring its own control, which means using a large number of remote controls.

### Description of the Invention

The present invention relates to a system making use of a device that the user will always carry with him or her, such as his or her mobile telephone, PDA or electronic notebook, for opening doors or controlling domotics systems, according to claim 1. Preferred embodiments of the system are defined in the dependent claims.

This system strongly increases security as strong security measures, such as encrypting the signal identifying the user to the apparatus control system, accompany emission of the opening signal.

The system comprises a transmitter and receiver that are able to maintain an electronic conversation, so they must comprise the same communication standard. In this conversation, the transmitter transmits a command to the receiver so that the latter makes the command reach an apparatus connected to the receiver. These apparatus can be doors to buildings, to rooms with security control, or garage doors. They may also be domotics systems, such as a sound system, an electrical appliance, heating or air conditioning apparatus, an alarm system or a light control panel.

The transmitter sends a first signal containing an identifier or a unique code, the command which the apparatus must perform and the apparatus that is to perform it. This first signal is encrypted by the transmitter using any encrypting program existing on the market.

The receiver receives the first signal, decrypts it and uses the content thereof to authenticate the transmitter, to recognize the apparatus of the command and to send the command to the apparatus, which performs the action and returns a second acceptance signal.

If any error exists in authentication, in the command or in the identification of the apparatus, said apparatus or the receiver respond to the transmitter with an error message.

The portable transmitter can advantageously be a mobile telephone, a PDA or an electronic notebook using technology such as Wi-Fi (i.e., according to IEEE 802.11b standard), Bluetooth (TM), Zigbee, HomeRF, infrared or other similar technology.

Another preferable embodiment of the invention adds a numerical security password in an interface of the transmitter so that if the transmitter is lost, no one other than the user can send commands to the different apparatus.

One of the most interesting commands that can be configured in the apparatus control system is that of supplying information on the state of the apparatus. The apparatus responds to the command with the emission, via the receiver, of the required information. This information will in any case be the apparatus on or off state, the rest of the content of the response changing according to the type of apparatus. Therefore for several types of apparatus the following can be mentioned, though without the intention of this being a comprehensive list:
Alarm System:
   Trigger state, i.e., if it went off due to the presence of an intruder, unauthorized opening of a door...
Door to building, room or garage:
   Open or closed state of the door.
Intercom:
   Open or closed state of the doors controlled by the intercom. In this case it is appropriate to establish permissions in the information provided.
Light control panel:
   On or off state of each individual light or of all lights. It is appropriate to associate a label to each light for the correct identification thereof.
Oven:
   Oven temperature.
   Time during which the oven has been operating.
   Programmed temperature.
   Programmed on and off time.
Air conditioning apparatus or heating apparatus:
   Temperature of a room.
   Programmed temperature.
   Programmed on and off time.

A group of apparatus can be centralized in a single receiver or each apparatus can have its own receiver.

It is further possible to establish a series of permissions, in the apparatus or in the receiver, by means of which each transmitter has authorization to control a series of apparatus, which may further change according to a schedule. It can therefore be assured that the number of the people who can open the door of room containing confidential information is reduced, and furthermore that not all of them may open it at any time, for example limiting access to security personnel during the night shift.

It is necessary to give extensive permissions to a group of transmitters for system configuration. An embodiment of the system reduces the number of transmitters with extensive permissions to one or two, which can register new transmitters in the system, modify their permissions or eliminate them, introduce new apparatus in the system, etc.

Another way to configure the system is through a computer system connected with the other elements, for example by means of the same wireless technology, to activate and modify their permissions. This computer system can be connected to an external network, such as Internet or Extranet, by means of high security protocols so as to allow control of a plurality of smart buildings from exchanges.

This computer system may furthermore send system activation notifications, for example by means of SMS messages to a mobile telephone. Security is thus increased by knowing when a given command has been sent to a given apparatus, such as the opening of the door of an office with confidential information. It can also be used to calm down parents by communicating to them the time that their children have returned home.

To that end the system is configured by introducing a first group of transmitters (1) and a second group of apparatus, the emitted or received commands of which will be transmitted by SMS. It may be arranged so that any command sent by a transmitter of the first group or sent to any apparatus of the second group, or only the commands sent by the transmitters of the first group to the apparatus of the second group, are communicated.

### Description of the Drawings

To better understand the invention, the following figure is included:

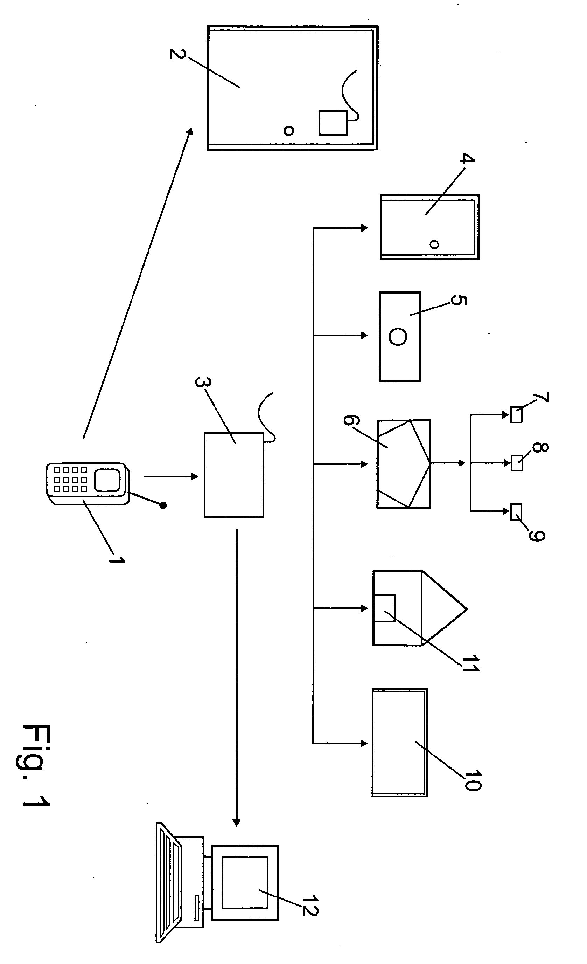

Figure 1 shows an operating diagram of the invention.

### Description of an Embodiment

An embodiment of the invention is very briefly described below as an illustrative and non-limiting example thereof.

Figure 1 shows an outline of the apparatus control system. A transmitter (1), which may be a mobile telephone, a PDA or any device having Bluetooth (TM), HomeRF, or Wi-Fi technology, or another similar technology, including an infrared port, can be seen in said figure.

The transmitter (1) sends a first encrypted signal to a smart door (2), which is able to recognize the transmitter (1), decrypt the first received signal to authenticate the transmitter (1) and proceed to open the door so as to allow the carrier of the transmitter (1) to enter.

A second possibility is that the first signal from the transmitter (1) is received by a receiver (3) which recognizes the transmitter (1) and authenticates it. Then it examines the command received and transmits it to an apparatus, such as a specific domotics system (6) such as:
- an access door (4) to a room, building or apartment
- an alarm system (5) controlling building or home security. This alarm system (5) can be by detecting opening of the door (4), volumetric...
- a garage door (10)
- an intercom (11) of a residents' association
- any other domotics system (6), such as for example the one regulating an air conditioning apparatus (8), a heating apparatus, a light control panel (7) of the home or building, an oven (9), the blinds of a room,...

It is possible to adjust permissions such that each transmitter (1) can open or control different doors (2, 4) or domotics systems (6), refusing it the ability to open other doors (2, 4) and controlling other domotics systems (6), and even allow opening only in a defined schedule.

Another possibility is to establish a receiver (3) in each one of the apparatus or for a small number of them. In this case the receiver (3) will recognize if the first signal has been sent to one of the apparatus of those it is connected to in addition to identifying the command received.

The command that the transmitter (1) sends can be entered into said transmitter (1) either by means of a combination of buttons or a touch screen of the transmitter (1) itself or by means of a voice command processed by a voice recognition module identifying the command given and the apparatus of the command. Therefore, the voice command "deactivate alarm" for example can be given to disconnect the alarm (5), or "open door 1" to open a lock of a door (2, 4) which has previously been identified with that number.

To optimize system operation it is possible that one of the commands that the transmitter (1) can give is a request for information on the state of the apparatus, whether it is a door (2, 4), a heating apparatus, an oven (9), etc. Therefore, in addition to providing the on or off state of the apparatus, the information that could be sent, for example, according to the apparatus is:

| **Apparatus** | **Information** |
|---|---|
| Alarm system (5) | Trigger state |
| Door (2, 4) or garage door (10) | Open or closed state |
| Intercom (11) | Open or closed state of the doors |
| Light control panel (7) | On or off state of each individual light or of all lights |
| Oven (9) | Temperature |
| | Operation time |
| | Programmed temperature |
| | Programmed on and off time |
| Air conditioning apparatus (8) or heating apparatus | Temperature of a room |
| | Programmed temperature |
| | Programmed on and off time |

The apparatus would answer this command through the receiver (3), providing the requested information. The user thus has knowledge of all the domotics systems (6) or doors (2, 4) from any room in the building or house, and can provide them with more appropriate commands: close an open door, raise heating temperature, etc.

System configuration is to be done from the transmitters (1), being advisable for there to be a small number of transmitters (1) that are authorized to admit new domotics systems (6) and doors (2, 4) in the system and to modify their parameters and permissions, as well as to admit or eliminate the other transmitters (1) in the system. Generally 1 or 2 configuring transmitters (1) will be defined, it being possible to define more.

It is possible to connect the system to Internet or to an Extranet through a computer system (12) so as to allow system configuration from a remote computer, such as an exchange unifying several systems. This connection with the computer system (12) can be done directly through a cable or by means of the same wireless communication system (Bluetooth (TM), infrared, etc.).

Such computer system (12) has the ability to send SMS messages, for example using an Altiria server. This ability is used in combination with a mobile telephone to notify when a signal has been sent to the receiver (3) and the corresponding command has been carried out, for example the opening of a door (2, 4).

Two groups can be pre-established within the system. These groups are a first group of transmitters (1) which is to send notification of the commands emitted, and a second group of apparatus which is to send notification of the commands performed. Notification can be given either when one of the two belongs to the corresponding group or when both do.

One application of this feature could be to inform a user of the time his or her children return home by means of sending an SMS when the transmitter (1) used by said children sends the command of opening the main door (2, 4) of the home.

Another second application is the notification of the opening of a door of an office with confidential information, notifying security control of the opening of said door, which allows them to verify if the user requested access beforehand.

## Claims

1. An apparatus control system comprising a portable transmitter (1) carried by a user of the control system of said apparatus, a receiver (3), **characterized in that**:
the transmitter (1) is configured to send a first encrypted signal with a command to be transmitted to the apparatus, identification of the apparatus and a unique identification code of the transmitter (1);
the receiver (3) is configured to receive and decrypt the first signal, to authenticate the transmitter (1) and to recognize the apparatus to which the command is addressed, and as an answer to transmit the received command to said apparatus;
the apparatus is a door (2, 4) or a domotics system (6) which is configured to receive the command from the receiver (3), recognize it and perform it, and as an answer to send a second acceptance signal accepting the command; and **in that**
both the receiver (3) and the apparatus are configured to return a message to the transmitter (1) if there is an error in authentication or in the command received.

2. A system according to claim 1, **characterized in that** the apparatus or the receiver (3) are configured to verify the authorization of the transmitter (1) so as to give commands to the apparatus according to a permission granted to the transmitter (1) and a validity schedule of said permission.

3. A system according to claim 2, **characterized in that** a small group of transmitters (1) is authorized to modify the permissions and their validity schedule.

4. A system according to claim 3, **characterized in that** it comprises a secure connection to an external network for the control and configuration of said system.

5. A system according to claim 4, **characterized in that** the external network is configured to send SMS messages to a mobile telephone when an transmitter (1) belonging to a first pre-established group of transmitters (1) sends a command to an apparatus included in a second predefined group of apparatus.

6. A system according to claim 1, **characterized in that** the transmitter (1) is configured to require the introduction of a password, which is encrypted and sent with the first signal, and verified by the receiver (3) or apparatus.

7. A system according to claim 1, **characterized in that** the transmitter (1) is a mobile telephone, a PDA or an electronic notebook having at least one technology chosen from: Bluetooth (TM), Wi-Fi, Zigbee and HomeRF.

8. A system according to claim 1, **characterized in that** each apparatus has its own receiver (3).

9. A system according to claim 1, **characterized in that** said command to be transmitted is a voice command and the transmitter (1) comprises a voice recognition module.

10. A system according to claim 1, **characterized in that** the apparatus is configured to send in turn information to the transmitter (1), this information including the on or off state of the apparatus, and other information depending on the type of apparatus:
in the case of it being an alarm system (5), the transmitted information further comprises the triggered or untriggered state of the alarm system (5);
in the case of it being a door (2, 4) or a garage door (10), the transmitted information further comprises the open or closed state;
in the case of it being an intercom (11), the transmitted information further comprises the open or closed state of the doors controlled by said intercom (11);
in the case of it being a light control panel (7), the transmitted information further comprises the on or off state of each individual light, or of all the lights controlled by the light control panel (7);
in the case of it being an oven (9), the transmitted information further comprises the temperature of the oven (9), operation time and programmed temperature;
in the case of it being an air conditioning apparatus (8) or a heating apparatus, the transmitted information further comprises the temperature of a room in which the air conditioning apparatus (8) or the heating apparatus is installed, the programmed temperature and the programmed on and off time.

## Amended claims

### Amended claims in accordance with Rule 86(2) EPC.

**1.** An apparatus control system comprising a portable transmitter (1) carried by a user of the control system of said apparatus, a receiver (3), where:
the transmitter (1) is configured to send a first encrypted signal with a command to be transmitted to the apparatus, identification of the apparatus and a unique identification code of the transmitter (1);
the receiver (3) is configured to receive and decrypt the first signal, to authenticate the transmitter (1) and to recognize the apparatus to which the command is addressed, and as an answer to transmit the received command to said apparatus;
**characterized in that**:
the apparatus is a door (2, 4) or a domotics system (6) which is configured to receive the command from the receiver (3), recognize it and perform it, and as an answer to send a second acceptance signal accepting the command; and **in that**
both the receiver (3) and the apparatus are configured to return a message to the transmitter (1) if there is an error in authentication or in the command received; and **in that**
the receiver (3) are configured to verify the authorization of the transmitter (1) so as to give commands to the apparatus according to a permission granted to the transmitter (1) and a validity schedule of said permission.

**2.** A system according to claim 1, **characterized in that** a small group of transmitters (1) is authorized to modify the permissions and their validity schedule.

**3.** A system according to claim 2, **characterized in that** it comprises a secure connection to an external network for the control and configuration of said system.

**4.** A system according to claim 3, **characterized in that** the external network is configured to send SMS messages to a mobile telephone when an transmitter (1) belonging to a first pre-established group of transmitters (1) sends a command to an apparatus included in a second predefined group of apparatus.

**5.** A system according to claim 1, **characterized in that** the transmitter (1) is configured to require the introduction of a password, which is encrypted and sent with the first signal, and verified by the receiver (3) or apparatus.

**6.** A system according to claim 1, **characterized in that** the transmitter (1) is a mobile telephone, a PDA or an electronic notebook having at least one technology chosen from: Bluetooth (TM), Wi-Fi, Zigbee and HomeRF.

**7.** A system according to claim 1, **characterized in that** each apparatus has its own receiver (3).

**8.** A system according to claim 1, **characterized in that** said command to be transmitted is a voice command and the transmitter (1) comprises a voice recognition module.

**9.** A system according to claim 1, **characterized in that** the apparatus is configured to send in turn information to the transmitter (1), this information including the on or off state of the apparatus, and other information depending on the type of apparatus:
in the case of it being an alarm system (5), the transmitted information further comprises the triggered or untriggered state of the alarm system (5);
in the case of it being a door (2, 4) or a garage door (10), the transmitted information further comprises the open or closed state;
in the case of it being an intercom (11), the transmitted information further comprises the open or closed state of the doors controlled by said intercom (11);
in the case of it being a light control panel (7), the transmitted information further comprises the on or off state of each individual light, or of all the lights controlled by the light control panel (7);
in the case of it being an oven (9), the transmitted information further comprises the temperature of the oven (9), operation time and programmed temperature;
in the case of it being an air conditioning apparatus (8) or a heating apparatus, the transmitted information further comprises the temperature of a room in which the air conditioning apparatus (8) or the heating apparatus is installed, the programmed temperature and the programmed on and off time.
